# DEMANDE DE BREVET EUROPEEN

(11) **EP 4 376 273 A1**
(43) Date de publication de la demande: **29.05.2024**
(21) Numéro de dépôt: 23210026.3
(22) Date de dépôt: 15.11.2023
(51) Int. Cl.: H02K 9/22

(54) **MACHINE ÉLECTRIQUE AVEC REFROIDISSEMENT DIRECT DES PASSAGES RADIAUX DANS LE CORPS DE STATOR**

(30) Priorité: 28.11.2022 FR 2212417
(71) Demandeur: IFP Energies nouvelles, 92500 Rueil-Malmaison (FR)
(72) Inventeur: VENTURI, Stephane, 92852 RUEIL-MALMAISON CEDEX (FR); VALIN, Thomas, 92852 RUEIL-MALMAISON CEDEX (FR); MILOSAVLJEVIC, Misa, 92852 RUEIL-MALMAISON CEDEX (FR)
(74) Mandataire: IFP Energies nouvelles

(57) **Abrégé**

L'invention concerne une machine électrique comprenant un stator, un carter (4) et deux flasques (5), les deux flasques (5) étant agencés respectivement aux extrémités longitudinales du carter, ledit stator (3) comprenant un corps de stator (8) et des bobines (6), le corps de stator (8) comprenant une multiplicité de passages radiaux disposés circonférentiellement et s'étendant sur toute la longueur du corps de stator (8) pour le passage des bobines (6) dans les passages radiaux. De plus, la machine électrique comprend au moins un guide thermique dans au moins un passage radial, le guide thermique comprenant une plaque (21) s'étendant sur toute la longueur longitudinale du corps de stator (8) et orientée sensiblement radialement, et deux extensions (22) fixées longitudinalement de part et d'autre de la plaque, au niveau de la périphérie radiale externe de la plaque (21), les extensions (22) étant en contact du carter et/ou des flasques.

## Description

### Domaine technique

La présente invention concerne le domaine des machines électriques et en particulier le refroidissement de ces machines électriques qui peuvent fonctionner en tant que moteur électrique ou en tant que générateur électrique. Les machines électriques de l'invention peuvent notamment être utilisées comme moteur électrique dans des applications de transport (automobile par exemple).

L'invention peut notamment être utilisée pour une machine électrique synchro-réluctante, assistée ou non d'aimants permanents, mais peut également être appliquée à d'autres types de machines électriques, comme des machines synchrones ou asynchrones.

Une machine électrique comporte classiquement une partie fixe, le stator, et une partie mobile en rotation, le rotor, disposées sensiblement coaxialement l'une dans l'autre. Le rotor est généralement logé à l'intérieur du stator qui porte des bobinages électriques générant un champ magnétique permettant d'entraîner en rotation le rotor (fonctionnement en tant que moteur électrique). Le stator comprend généralement un corps de stator et des bobines qui entourent au moins partiellement le corps de stator.

Lors de leur fonctionnement, les machines électriques s'échauffent du fait des pertes électromagnétiques (pertes par effet Joule et pertes fer) et mécaniques. Cet échauffement nuit à leur fonctionnement et conduit à la dégradation de leurs performances. Par exemple, si le stator n'est pas refroidi (ou pas suffisamment refroidi), la température du bobinage augmente, ce qui peut entraîner une baisse de la conductivité électrique du cuivre constituant les bobines et une diminution de la durée de vie du bobinage. Ainsi, une part importante de pertes des machines électriques (-20 à 30% pour des machines usuellement trouvées sur le marché et jusqu'à 70% sur les machines de courte longueur) sont des pertes joules dans les bobinages en cuivre ou aluminium positionnées au niveau du stator. Ces pertes diminuent les performances des machines par la limitation de la température maximale des matériaux, que ce soit pour un fonctionnement en pic de puissance et en fonctionnement en continu.

La résistance électrique du cuivre augmentant avec la température, il y a également une perte de rendement et un accroissement des pertes sous forme de chaleur. Les divers composants électromagnétiques d'une machine électrique, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine, d'assurer une répétabilité de ses performances, d'allonger sa durée de vie et de limiter la maintenance.

La recherche d'un refroidissement performant est donc une préoccupation majeure pour les fabricants et les intégrateurs de machines électriques.

### Technique antérieure

Dans le système de refroidissement conventionnel des moteurs électriques, le liquide circule dans une « chemise » en contact avec le stator et le flux thermique transite par conduction / convection de proche en proche du cuivre, au fer stator puis à la chemise avant de terminer par convection dans le liquide caloporteur. De plus, un isolant électrique et thermique est généralement placé dans l'encoche du stator pour éviter de détériorer l'isolant du cuivre au contact du fer. Cet isolant électrique et thermique génère une résistance thermique supplémentaire entre le cuivre et le fer.

Cette solution refroidit bien le stator grâce au contact solide entre le stator et la chemise, mais les bobines situées dans les encoches du stator sont essentiellement en contact avec l'air interne de la machine, ce qui ne permet pas d'évacuer facilement la chaleur des bobines. Il se crée alors des points chauds limitant à la fois :
- Le rendement (car les pertes évoluent avec la température du cuivre) ;
- La densité de couple générée par la machine par la limitation de la densité de courant surfacique dans les encoches.

Une variante est la circulation du fluide caloporteur dans des canaux dans le corps de stator supprimant ainsi la chemise. Cette variante est notamment décrite dans la demande de brevet FR 21/07,709. Cependant, le fluide caloporteur circule au sein d'un tube inséré dans le corps de stator et la paroi de ce tube crée une résistance thermique. De plus, le coeur de l'encoche reste une zone de concentration de chaleur. Le coeur de l'encoche peut être défini par des conducteurs en cuivre.

Le refroidissement direct par huile (dripping ou jet) est une solution efficace pour évacuer les calories notamment dans les zones d'impact des jets qui concernent principalement les têtes de bobines. Cependant, cette solution ne permet pas d'évacuer la chaleur des bobines, de manière homogène, au niveau des encoches car l'huile ne peut pas ou peut difficilement atteindre cette zone. En effet, le refroidissement est important au niveau de l'impact de l'huile sur les conducteurs mais il est faible loin de la zone d'impact.

Enfin, un tel refroidissement par huile nécessite un système de pompage et d'échange avec l'environnement ambiant, ce qui est donc complexe et coûteux.

Michael Galea, Chris Gerada, Tsarafidy Raminosoa, and Patrick Wheeler, 2012. A Thermal Improvement Technique for the Phase Windings of Electrical Machines. IEEE TRANSACTIONS ON INDUSTRY APPLICATIONS, VOL. 48, NO. 1, JANUARY/FEBRUARY 2012 décrit une solution de refroidissement dans l'encoche du stator (« heat path » signifiant chemin de chaleur). Cette solution consiste à introduire un élément conducteur thermique dans l'encoche de manière à conduire la chaleur du coeur de l'encoche vers le fer magnétique du corps de stator. Toutefois, la performance thermique de cette solution dépend majoritairement de la qualité de contact du conducteur avec le fond de l'encoche ou tout autre partie de l'encoche. Dès que la résistance de contact due à la mise en oeuvre apparaît, le gain obtenu devient négligeable. Or, la qualité de ce contact est difficile à mettre en oeuvre car elle nécessite un positionnement précis et un maintien "en pression" pour le contact alors que les bobines sont à positionner dans cet espace. De plus, dans cette solution, la chaleur est évacuée depuis le coeur de l'encoche en passant par l'élément conducteur, puis par le corps de stator par contact entre l'élément conducteur et le corps de stator (contact de mauvaise qualité par nature comme expliqué précédemment), puis par contact entre le corps de stator et la chemise externe et enfin par le fluide caloporteur. Or, le fer du corps de stator n'est pas un bon conducteur thermique. De ce fait, le refroidissement du coeur de l'encoche n'est pas satisfaisant dans cette solution. En outre, sa mise en oeuvre est complexe.

Le problème technique que l'on souhaite résoudre consiste à améliorer l'évacuation de la chaleur en la captant au plus près des bobines et notamment au coeur de l'encoche, dans les encoches du corps de stator, pour améliorer le rendement énergétique de la machine et augmenter sa durée de vie, et de manière à augmenter la densité de couple massique de la machine à moindre coût vis-à-vis des solutions existantes plus complexes.

### Résumé de l'invention

L'invention concerne une machine électrique comprenant un stator s'étendant selon un axe longitudinal, un carter et deux flasques en matériau métallique, lesdits deux flasques étant agencés respectivement aux extrémités longitudinales dudit carter et formant avec ledit carter une enveloppe extérieure de ladite machine électrique, ledit stator comprenant un corps de stator et des bobines, le corps de stator comprenant une multiplicité de passages radiaux disposés circonférentiellement et s'étendant sur toute la longueur longitudinale du corps de stator pour le passage des bobines dans les passages radiaux. De plus, la machine électrique comprend au moins un guide thermique dans au moins un passage radial, le guide thermique comprenant une plaque s'étendant sur toute la longueur longitudinale du corps de stator et orientée sensiblement radialement, la plaque étant en contact des bobines de telle sorte qu'on obtient une bonne connexion thermique entre la bobine et le guide thermique, et deux extensions fixées longitudinalement de part et d'autre de la plaque, au niveau de la périphérie radiale externe de la plaque, la machine électrique comprenant un moyen de mise en contact pour mettre les extensions en contact du carter et/ou des flasques.

De préférence, chaque passage radial a un axe de symétrie radial, et la plaque est positionnée sur l'axe de symétrie du passage radial dans lequel le guide thermique est positionné.

Avantageusement, les extensions s'étendent d'abord longitudinalement en partant de la plaque, puis radialement en direction du carter puis longitudinalement, pour venir en contact longitudinal avec le carter, de manière à former un « S » ou un « C ».

Selon une configuration avantageuse de l'invention, le guide thermique comprend une partie massive fixée à l'extrémité radiale externe de la plaque et aux extensions.

De manière avantageuse, la partie massive et les extensions forment une pièce unique.

Selon une variante, ladite pièce unique est un tube apte à la circulation d'un fluide caloporteur, le tube étant relié au carter et/ou aux flasques par des moyens d'étanchéité et/ou en étant noyé dans un matériau d'enrobage, tel qu'une résine.

Selon un mode de réalisation de l'invention, la plaque comprend une partie enroulée sur elle-même au niveau de l'extrémité radiale externe, la partie enroulée sur elle-même puis découpée formant la partie massive.

De préférence, les extensions sont constituées chacune d'un prolongement longitudinal de la partie enroulée sur elle-même, chaque prolongement étant de préférence aplati au niveau du contact avec le carter ou le flasque.

Selon une mise en oeuvre, le corps de stator comprend une entaille au niveau de la surface radiale externe du passage radial, ladite entaille étant configurée pour recevoir ladite partie massive.

Avantageusement, la plaque est d'épaisseur constante ou d'épaisseur croissante depuis l'extrémité radiale interne jusqu'à l'extrémité radiale externe.

Préférentiellement, le guide thermique comprend un matériau de conductivité thermique supérieure au matériau du corps de stator, de préférence comprenant de l'aluminium ou du cuivre.

De manière préférée, les extensions sont fixées par soudage, par vis et/ou par rivets au carter ou au flasque.

Selon un mode de réalisation, la machine électrique comprend un anneau fretté ou vissé à chaque extrémité longitudinale du corps de stator, chaque extension étant positionnée entre l'anneau fretté ou vissé et le carter.

De préférence, la machine électrique comprend au moins un guide thermique dans chaque passage radial, de préférence la machine électrique comprend plusieurs guides thermiques dans chaque passage radial.

### Liste des figures

D'autres caractéristiques et avantages de la machine électrique selon l'invention, apparaîtront à la lecture de la description ci-après d'exemples non limitatifs de réalisations, en se référant aux figures annexées et décrites ci-après.

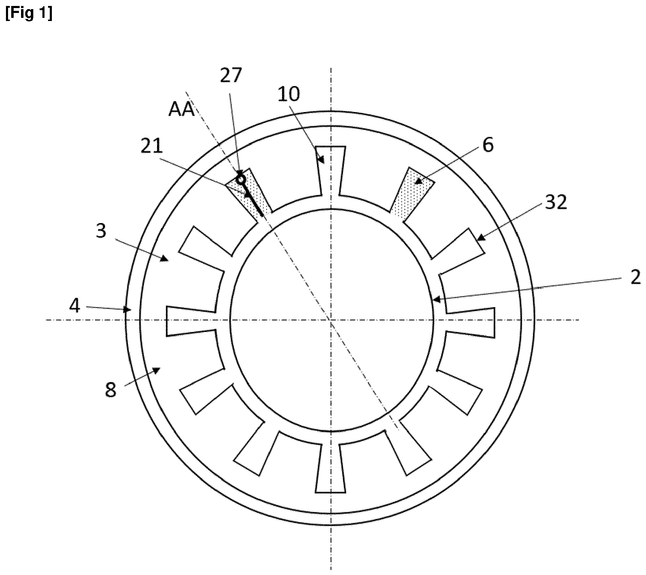

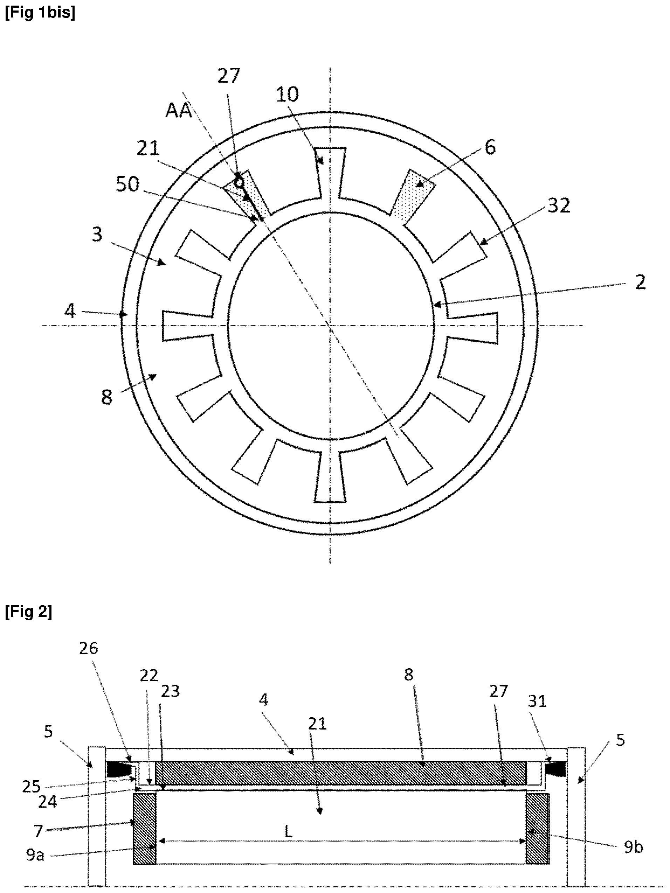

La figure 1 représente une première vue dans un plan orthogonal à l'axe longitudinal d'une machine électrique selon l'invention.
La figure 1 bis représente une variante de la figure 1 d'une machine électrique selon l'invention.
La figure 2 représente une vue dans un plan longitudinal d'une première variante de machine électrique selon l'invention.
La figure 3 représente une vue dans un plan longitudinal d'une deuxième variante de machine électrique selon l'invention.
La figure 4 représente une vue dans un plan longitudinal d'une troisième variante de machine électrique selon l'invention.
La figure 5 représente un premier mode de réalisation d'un guide thermique d'une machine électrique selon l'invention.
La figure 6 représente un deuxième mode de réalisation d'un guide thermique d'une machine électrique selon l'invention.
La figure 7 représente un troisième mode de réalisation d'un guide thermique d'une machine électrique selon l'invention.
La figure 8 représente le guide thermique logé dans le passage radial avec une encoche selon l'invention.
La figure 9 représente un quatrième mode de réalisation d'un guide thermique d'une machine électrique selon l'invention.

### Description des modes de réalisation

On entend par « plaque » ou « lamelle », une pièce dont la longueur dans une dimension est très inférieure (par exemple inférieure à un tiers) à la longueur dans les autres dimensions de cette pièce. La longueur de cette dimension est généralement l'épaisseur qui est inférieure à la longueur et à la largeur de la pièce. Il peut s'agir par exemple d'au moins une feuille pleine de matière ou d'au moins une feuille de matière comprenant des ouvertures (des trous).

La plaque peut être plane ou non plane, elle peut alors être ondulée ou bosselée par exemple. Par « partie massive », on entend que la partie concernée est de plus grande dimension (la dimension étant l'épaisseur de cette partie, dans la même direction que l'épaisseur de la plaque, ou le diamètre extérieur de cette partie lorsque cette partie est un fil, un câble ou un tube) que l'épaisseur de la plaque. Elle comporte ainsi localement une plus grande quantité de matière.

Par « plan longitudinal », on entend un plan comprenant l'axe longitudinal de la machine électrique

L'invention concerne une machine électrique comprenant un stator s'étendant selon un axe longitudinal. La machine électrique peut aussi comporter un rotor, le stator et le rotor étant de préférence coaxiaux, le rotor étant apte à tourner autour de l'axe longitudinal et le stator entourant de préférence le rotor. La machine électrique comporte également un carter (aussi appelé « chemise ») et deux flasques (qui portent généralement les paliers du rotor). Les deux flasques sont agencés respectivement aux extrémités longitudinales du carter et forment avec le carter une enveloppe extérieure de la machine électrique. Le carter et/ou les flasques sont en matériau métallique, de manière à pouvoir transporter la chaleur de manière efficace. Ils peuvent notamment être en aluminium ou en alliage d'aluminium. Cette enveloppe extérieure sert de protection au stator et éventuellement au rotor qui se trouvent à l'intérieur de cette enveloppe extérieure. De plus, cette enveloppe extérieure peut servir au refroidissement de la machine électrique, par convection avec l'air extérieur ambiant ou par la circulation d'un fluide caloporteur dans et/ou autour de l'enveloppe extérieure (dans et/ou autour du carter et/ou des flasques).

Le stator comprend un corps de stator et des bobines, le corps de stator comprenant une multiplicité de passages radiaux selon la vue longitudinale (aussi appelés encoches). Ces passages radiaux sont disposés circonférentiellement sur le corps de stator, de préférence en étant régulièrement répartis sur la circonférence du corps de stator, et s'étendent sur toute la longueur longitudinale du corps de stator. En d'autres termes, les passages radiaux traversent totalement le corps de stator pour permettre le passage des bobines dans ces passages radiaux. Les passages radiaux constituent ainsi des ouvertures s'étendant sensiblement dans la direction radiale, dans le corps de stator.

En outre, la machine électrique comprend au moins un guide thermique dans au moins un passage radial. Ce guide thermique a pour but de capter la chaleur générée par les bobines, et notamment du coeur de l'encoche qui est la zone la plus éloignée de la source froide, afin de l'évacuer vers une des sources froides. Ainsi, la chaleur est mieux évacuée, et la résistance électrique du cuivre liée à l'augmentation de la température est réduite. On peut ainsi augmenter la densité de couple généré par la machine électrique et augmenter son rendement.

Selon l'invention, le guide thermique comprend une plaque s'étendant sur toute la longueur longitudinale du corps de stator et orientée sensiblement radialement, de préférence, sur au moins toute la hauteur radiale des passages radiaux. Ainsi, la plaque est de la plus grande dimension possible dans les passages radiaux, ce qui permet de mieux capter la chaleur induite dans les passages radiaux.

De manière à pouvoir capter la chaleur des bobines, la plaque du guide thermique est en contact des bobines. Par exemple, les bobines peuvent être montées serrées dans le passage radial de manière à être en contact de la plaque également située dans le passage radial. En d'autres termes, la machine électrique comprend un moyen de maintien pour maintenir le contact entre les bobines et la plaque, ce moyen de maintien pouvant par exemple être le positionnement des bobines dans le passage radial pour assurer le contact avec la plaque.

De plus, le guide thermique comprend au moins une et préférentiellement deux extensions fixées à la plaque ou faisant partie de la plaque, et s'étendant longitudinalement au moins depuis leur fixation au niveau de la plaque. La fixation de chaque extension avec la plaque se trouve au niveau de la périphérie radiale externe de chaque extrémité longitudinale de la plaque. Ainsi, les extensions s'étendent depuis l'extrémité radiale externe de la plaque, au moins longitudinalement dans la direction opposée au corps de stator (vers chaque flasque), depuis chaque extrémité longitudinale de la plaque.

De préférence, la hauteur radiale (longueur le long de la direction radiale) de la plaque peut être supérieure à la hauteur radiale des passages radiaux, de manière à ce que la plaque dépasse des passages radiaux vers le centre du stator, au moins au moment de la réalisation du bobinage du stator et peut être découpée au niveau du diamètre interne du stator une fois le bobinage fini. Ainsi, les éléments conducteurs des bobines peuvent être insérés de part et d'autre de la plaque sans rencontrer de parties pointues de la plaque (extrémité la plus proche de l'axe longitudinal notamment). Une fois le bobinage fini, on peut alors découper la plaque au niveau du diamètre interne du stator.

Alternativement ou additionnellement, la plaque peut comprendre une extrémité interne arrondie. Autrement dit, l'extrémité la plus proche de l'axe longitudinal peut être arrondie.

Cette extrémité interne arrondie peut être sensiblement en retrait vis-à-vis du diamètre interne du stator car le passage radial a une forme qui se referme au niveau du diamètre interne.

De plus, les extensions sont en contact du carter et/ou des flasques. En d'autres termes, la machine électrique comprend un moyen de mise en contact pour mettre les extensions en contact avec le carter et/ou avec les flasques. Par exemple, ce moyen de mise en contact peut être un anneau fretté positionné sur l'extension, une vis, un rivet ou une soudure. Ainsi, le guide thermique peut capter la chaleur dans le passage radial concerné, grâce à la plaque. La chaleur est alors conduite, depuis la plaque vers les extensions, de chaque côté du corps de stator, par conduction thermique. Puis, la chaleur est conduite depuis les extensions vers l'enveloppe extérieure via le carter et/ou les flasques.

Contrairement à l'art antérieur « heat path » évoqué, le contact entre les extensions et le carter et/ou les flasques peut être bien plus facilement maîtrisé à l'extérieur du corps de stator que le contact entre le guide thermique dans les passages radiaux et le corps de stator, en raison du montage des bobines dans ces passages radiaux. Ainsi, la mise en oeuvre de l'invention est simple et reproductible. De plus, le transfert de chaleur peut aller directement du guide thermique (qui constitue un meilleur conducteur thermique que le fer laminé du corps de stator) vers l'enveloppe extérieure, sans passer par le corps de stator, dont le fer est un mauvais conducteur thermique. Ainsi, en plus de simplifier le montage et d'améliorer le contact, le transfert de chaleur est amélioré en réduisant la résistance thermique.

L'invention consiste ainsi en un moyen simple et passif pour évacuer la chaleur depuis le coeur du passage radial, tout en étant démontable et recyclable. Avec l'invention, la température dans les passages radiaux peut être réduite d'au moins 30°C. De plus, l'invention peut fonctionner sans système de pompage de liquide, par exemple avec un refroidissement du moteur par air.

Le refroidissement de l'enveloppe extérieure peut alors comprendre un refroidissement par convection, naturelle ou forcée, avec l'air ambiant du carter et/ou des flasques.

Le refroidissement de l'enveloppe extérieure peut également être assuré par des canaux de circulation d'un fluide caloporteur dans le carter et/ou dans les flasques. Cette circulation permet d'améliorer le refroidissement de la machine. Le fluide caloporteur peut être par exemple de l'eau, du glycol, de l'eau glycolée, un fluide diélectrique ou de l'huile

La machine électrique peut fonctionner (ou être apte à fonctionner) aussi bien en générateur électrique (elle génère de l'électricité à partir d'un mouvement de rotation issu du rotor par exemple) qu'en moteur électrique (elle génère alors une rotation du rotor par exemple à partir d'électricité).

Selon une variante, la machine électrique peut comporter plusieurs guides thermiques tels que décrits précédemment (plaque avec extensions de chaque côté, les extensions étant en contact avec le carter et/ou le flasque) dans un même passage radial. L'utilisation de plusieurs guides thermiques dans un même passage radial permet d'améliorer l'évacuation de la chaleur.

Alternativement ou additionnellement, la machine électrique peut comporter au moins un guide thermique (plaque avec extensions de chaque côté, les extensions étant en contact avec le carter et/ou le flasque), et de préférence plusieurs guides thermiques, dans chaque passage radial. Grâce à au moins un guide thermique dans chaque passage radial, on peut aisément récupérer la chaleur dans le corps de stator, au sein même des passages radiaux et on limite ainsi la montée en température des bobines, et ce de manière homogène sur la circonférence du corps de stator, permettant d'améliorer la durée de vie de la machine et son rendement.

De préférence, chaque passage radial peut avoir un axe de symétrie radial et la plaque peut avantageusement être positionnée sur l'axe de symétrie du passage radial dans lequel le guide thermique est positionné. Ainsi, le guide thermique se trouve au centre du passage radial, ce qui permet de mieux capter la température et d'avoir une température homogène dans le passage radial de part et d'autre du guide thermique.

De manière avantageuse, la plaque peut comprendre au moins une partie plane, s'étendant radialement. Par partie plane, on entend que la plaque s'étend entre les surfaces séparées par l'épaisseur de la plaque (c'est-à-dire la plus petite dimension de la plaque) sont planes et de préférence parallèles entre elles (la plaque a donc une épaisseur constante). De ce fait, la réalisation est simple.

En outre, la plaque peut avoir une épaisseur comprise entre 0,1 mm et 1 ,5mm, de préférence entre 0,1 mm et 0,9 mm. Ces épaisseurs sont suffisamment faibles pour ne pas entraver inutilement l'espace disponible dans le passage radial et ainsi avoir suffisamment d'espace pour le bobinage, et elles sont suffisamment épaisses pour assurer une conduction de chaleur suffisante.

Avantageusement, les extensions peuvent comprendre chacune une zone aplatie (plate) au niveau de la surface de contact avec le carter et/ou les flasques de manière à assurer une surface de contact et donc l'échange thermique en minimisant la résistance thermique. Par exemple, les extensions aplaties (plates) peuvent être vissées ou rivetées au carter directement ou maintenues en place par un anneau conique vissée ou frettée, l'anneau conique pouvant ainsi plaquer les extensions contre le carter ou le flasque, ou elles peuvent être soudées par un outil de soudage. Cette solution est compatible avec un démontage du stator manuel en coupant par pince les extensions aplaties lorsque les extensions aplaties sont soudées et sous presse pour un démontage automatisé.

Ainsi, le montage et le démontage sont compatibles avec une production en série, des opérations de maintenance ou de séparation de matériaux lors d'un processus de recyclage de la machine.

Selon une configuration de l'invention, les extensions peuvent s'étendre, depuis leur fixation avec la plaque, d'abord longitudinalement en direction opposée au corps de stator (vers le flasque le plus proche de cette extrémité), puis radialement en direction du carter puis longitudinalement, pour venir en contact longitudinal avec le carter. Cette configuration permet de venir mettre en contact l'extension avec le carter, alors que la périphérie radiale externe des passages radiaux est sur un diamètre strictement inférieur au diamètre interne du carter. L'extension peut alors former sensiblement un « S » (ayant sensiblement la forme d'une marche d'escalier) lorsque les deux parties s'étendant longitudinalement sont dirigées dans la même direction ou former sensiblement un « C » lorsque les deux parties s'étendant longitudinalement sont dirigées dans des directions opposées, la première (celle partant de la fixation avec la plaque) dans la direction opposée au corps de stator (vers le flasque le plus proche) et la deuxième (celle située après la partie s'étendant radialement) vers le corps de stator, en partant de l'extrémité fixée à la partie radiale.

Selon une mise en oeuvre, la plaque peut être fixée, par exemple par soudage, à un fil qui s'étend sur toute la longueur longitudinale de la plaque et dépasse de chaque côté de chaque extrémité longitudinale de la plaque de manière à former les extensions.

De préférence, le fil peut avoir un diamètre au moins égal à l'épaisseur de la plaque au niveau de sa fixation avec la plaque, de préférence supérieure à l'épaisseur de la plaque au niveau de sa fixation avec la plaque, de manière à faciliter l'évacuation de la chaleur.

Avantageusement, le guide thermique peut comprendre une partie massive fixée à l'extrémité radiale externe de la plaque et aux extensions. Cette partie massive a une dimension (largeur) supérieure à l'épaisseur de la plaque, prise dans la même direction que l'épaisseur de plaque. Cette partie massive permet de mieux récupérer la chaleur de la plaque pour l'évacuer avec moins de résistance thermique.

Cette partie massive s'étend sur toute la longueur de la plaque, c'est-à-dire sur toute la longueur du corps de stator, dans la direction longitudinale.

La partie massive peut ainsi comprendre un fil tel que décrit précédemment dont le diamètre est supérieur (de préférence strictement supérieur) à l'épaisseur de la plaque.

De préférence, la partie massive et les extensions peuvent former une pièce unique. Ainsi, elles sont réalisées ensemble, ce qui en simplifie la fabrication. De plus, les extensions peuvent alors être de même section que la partie massive, ce qui permet de conduire efficacement la chaleur jusqu'à l'enveloppe extérieure, les extensions étant alors massives de largeur ou de diamètre supérieur, de préférence strictement, à l'épaisseur de la plaque du guide thermique.

Selon une première variante, la pièce unique formant la partie massive et les extensions, peut être un tube apte à la circulation d'un fluide caloporteur. Ainsi, la pièce unique est alors fixée à la plaque, par exemple par soudage. Le tube s'étend sur toute la longueur du corps de stator et dépasse de chaque côté du corps de stator pour former les extensions.

Si le tube est en contact avec le carter, il peut notamment former un « S » ou un « C » ou une forme libre permettant d'atteindre le carter comme expliqué précédemment au niveau des extensions.

Si le tube est en contact avec les flasques, il peut s'agir d'un tube droit, s'étendant uniquement dans la direction longitudinale. Ainsi, il est plus simple à réaliser.

Grâce à l'utilisation du tube comme partie massive et comme extensions et à l'utilisation d'un fluide caloporteur, la température dans les passages radiaux peut être réduite de plus de 30°C. Dans cette première variante, le tube peut être relié au carter et/ou aux flasques par des moyens d'étanchéité. Ainsi, il est possible de faire circuler un fluide caloporteur, tel qu'un liquide ou un gaz, dans le tube afin de refroidir encore plus efficacement les passages radiaux en raccourcissant le chemin entre la source de chaleur (les conducteurs dans l'encoche) et la source froide (le fluide caloporteur). Le fluide caloporteur peut arriver par le carter et/ou par les flasques via un canal de refroidissement intégré au carter et/ou aux flasques. Les moyens d'étanchéité peuvent notamment être des joints d'étanchéité compatibles avec le fluide caloporteur utilisé et avec la température maximale de la machine.

Alternativement, pour cette première variante, le tube peut être relié au carter et/ou aux flasques en étant noyé dans un matériau d'enrobage, tel qu'une résine conductrice thermique. La combinaison de l'utilisation de la résine et d'un tube qui permet la circulation du fluide au sein même des passages radiaux, permet une amélioration du refroidissement de la machine. Le matériau d'enrobage peut notamment noyer également les têtes de bobines (qui dépassent du corps de stator à chaque extrémité longitudinales) qui représentent également des points chauds sur la machine. Ainsi, il est possible de faire circuler un fluide caloporteur, tel qu'un liquide ou un gaz, dans le tube afin de refroidir encore plus efficacement les passages radiaux et le matériau d'enrobage. Le fluide caloporteur peut arriver par le carter et/ou par les flasques via un canal de refroidissement intégré au carter et/ou aux flasques.

Dans cette première variante, le matériau d'enrobage peut être limité au niveau des têtes de bobines (et ne pas être mis en place dans les passages radiaux). En effet, la présence du guide thermique permet de récupérer la chaleur de manière suffisamment efficace sans avoir besoin d'un matériau d'enrobage dans les passages radiaux. En utilisant un matériau d'enrobage seulement autour des têtes de bobines, la mise en oeuvre du matériau d'enrobage est plus simple, moins longue et donc moins chère. Au contraire, pour les solutions de l'art antérieur, il est nécessaire de faire pénétrer la résine autour des conducteurs à l'intérieur des passages radiaux, sur toute leur longueur axiale afin d'assurer une bonne récupération de la chaleur. Cette mise en place nécessite des équipements spécifiques et elle est plus complexe et longue et donc plus chère.

Pour cette première variante, le tube peut comprendre au moins une portion qui s'insère dans un alésage du flasque ou du carter, avec par exemple un moyen d'étanchéité entre le tube et l'alésage du flasque ou du carter. Cette solution permet un démontage tout en assurant un bon contact entre le tube et le carter ou le flasque, un bon maintien en position et une bonne conduction de chaleur.

Selon une deuxième variante de l'invention, la plaque peut comprendre une partie enroulée sur elle-même au niveau de l'extrémité radiale externe, la partie enroulée sur elle-même puis découpée formant la partie massive. En effet, la partie enroulée sur elle-même, grâce à l'enroulement, forme une partie dont la largeur est supérieure à l'épaisseur de la plaque elle-même. Ainsi, elle forme bien une partie massive. Cette solution est particulièrement intéressante car elle est simple à fabriquer et ne nécessite pas d'opérations de soudage entre la plaque et la partie massive.

Avantageusement, pour cette deuxième variante de l'invention, les extensions peuvent être constituées chacune d'un prolongement longitudinal de la partie enroulée sur elle-même puis découpée. Ainsi, la plaque, la partie massive et les extensions sont réalisées dans un ensemble unique, sans opération de soudage. De plus, cette fabrication est simple. En outre, chaque prolongement des extensions peut, de préférence, comprendre une extrémité aplatie au niveau du contact avec le carter ou le flasque. L'extrémité aplatie facilite et améliore le contact entre l'extension et le carter ou le flasque, que ce soit par soudage, par bridage ou par frettage. Cette solution facilite également la réalisation. En effet, l'extrémité aplatie étant à l'extérieur des encoches, il est plus facile d'assurer le contact. De plus, grâce à l'extrémité aplatie, on augmente la surface de contact et donc l'échange thermique entre ces pièces.

Selon une troisième variante, la pièce unique formant la partie massive et les extensions, peut être un fil de diamètre supérieur, de préférence strictement, à celui de la plaque au niveau de sa fixation avec le fil. Ainsi, la pièce unique est alors fixée à la plaque, par exemple par soudage. Le fil s'étend sur toute la longueur du corps de stator et dépasse de chaque côté du corps de stator pour former les extensions.

Si le fil est en contact avec le carter, il peut notamment former un « S » ou un « C » ou une forme libre permettant d'atteindre le carter et/ou flasque comme expliqué précédemment au niveau des extensions.

Avantageusement, lorsque le guide thermique comprend une partie massive, le corps de stator peut comprendre une entaille (une rainure) au niveau de la surface radiale externe du passage radial, l'entaille (la rainure) étant configurée pour recevoir (accueillir) la partie massive, la maintenir par exemple pendant le bobinage des bobines autour du corps de stator, et la guider pendant l'insertion du guide thermique dans le passage radial. En utilisant cette entaille, la partie massive du guide thermique est positionnée en dehors du passage radial et ainsi n'entrave pas l'encombrement du passage radial destiné au passage des bobines. De plus, cette entaille permet une mise en place du guide thermique plus aisé dans les passages radiaux. En effet, cette entaille peut permettre un maintien en position du guide thermique dans le passage radial au moment du bobinage des bobines dans les passages radiaux pour former le stator. Pour cela, l'entaille peut être apte au maintien en position de la partie massive dans cette entaille.

L'entaille peut être positionnée de préférence sur l'axe de symétrie du passage radial. Ainsi, le guide thermique peut être positionné au centre du passage radial, ce qui permet une température homogène des deux côtés du guide thermique.

Selon une mise en en oeuvre de l'invention, la plaque peut être d'épaisseur constante, notamment pour les variantes où une partie de la plaque est enroulée sur elle-même puis découpée.

En variante, la plaque peut être d'épaisseur croissante depuis l'extrémité radiale interne jusqu'à l'extrémité radiale externe. Avec une épaisseur croissante, la conduction de la chaleur est améliorée et guidée vers l'extrémité radiale externe qui sert de partie massive (car l'épaisseur est plus importante dans cette zone). La chaleur est ensuite acheminée de cette partie massive vers les extensions de chaque côté.

De préférence, le guide thermique peut comprendre un matériau de conductivité thermique supérieure au matériau du corps de stator (qui est de préférence en fer magnétique). Préférentiellement, le guide thermique peut comprendre de l'aluminium ou du cuivre, par exemple être en aluminium ou en cuivre ou en alliage d'aluminium et/ou de cuivre. Ainsi, la chaleur est facilement conduite vers le carter ou les flasques. De plus, l'utilisation de ces matériaux permet la réalisation de la plaque avec une partie enroulée sur elle-même puis découpée, ce type d'enroulement étant facilité par l'utilisation de tels matériaux.

Selon un mode de réalisation de l'invention, les extensions peuvent être fixées par soudage au carter ou au flasque. Le soudage au carter, lorsque le guide thermique est en aluminium par exemple, peut être aisément démontable par usage de pinces par exemple. De plus, le soudage permet d'assurer un bon contact et donc un échange thermique par conduction.

Selon un autre mode de réalisation, la machine électrique peut comprendre un anneau fretté à chaque extrémité longitudinale du corps de stator, chaque extension du guide thermique étant positionnée entre l'anneau fretté et le carter. De ce fait, le contact entre l'extension et le carter est de bonne qualité et maintenu grâce à l'anneau fretté.

Selon un autre mode de réalisation, la machine électrique peut comprendre un anneau vissé à chaque extrémité longitudinale du corps de stator, chaque extension du guide thermique étant positionnée entre l'anneau vissé et le carter. De ce fait, le contact entre l'extension et le carter est de bonne qualité et maintenu grâce à l'anneau vissé. Pour cela, l'anneau vissé peut comprendre une partie filetée sur le diamètre externe de l'anneau et le carter comprend une partie taraudée dans laquelle la partie filetée de l'anneau vissé peut s'engager et être vissé.

Avantageusement, la partie massive ou la périphérie radiale externe de la plaque peut être en contact avec le corps de stator au niveau de la surface externe radiale du passage radial. Ce contact améliore encore le refroidissement en permettant à une partie de la chaleur de transiter par le fer magnétique du corps de stator pour rejoindre le carter.

De préférence, la partie massive et/ou la périphérie radiale externe de la plaque peut être collée au corps de stator au niveau de la surface externe radiale du passage radial de manière à assurer un bon contact et à assurer son maintien dans le temps. Ainsi, le refroidissement peut encore être amélioré et ce de manière plus durable.

La figure 1 illustre, de manière schématique et non limitative, une machine électrique selon un mode de réalisation de l'invention.

Cette machine électrique comprend un rotor 2 et un stator 3 coaxiaux, avec le stator 3 qui entoure le rotor 2.

Le stator 3 comprend un corps de stator 8 qui comporte des passages radiaux 10 (ici douze passages radiaux 10). Les passages radiaux 10 correspondent à des ouvertures (ou des encoches), s'étendent sensiblement radialement depuis la surface interne du corps de stator 8 (surface interne cylindrique), sur toute la longueur du corps de stator 8. Les passages radiaux 10 traversent donc le corps de stator longitudinalement selon l'axe commun du stator 3 et du rotor 2.

Ces passages radiaux 10 permettent le passage des bobines 6. Chaque passage radial 10 comprend des bobines 6.

A l'extérieur du corps de stator 8, se trouve un carter 4, de préférence en aluminium.

L'un au moins des passages radiaux 10 (de préférence chaque passage radial 10) comporte un guide thermique comprenant une plaque 21 orientée sensiblement selon l'axe AA qui est l'axe de symétrie du passage radial 10 concerné. Cet axe de symétrie AA est orienté radialement.

A la périphérie externe radiale de la plaque 21, se trouve une partie massive 27 fixée sur la plaque 21. Tel que représenté, la partie massive 27 est en contact de la surface radiale externe 32 du passage radial 10, par exemple, la partie massive 27 peut être collée à la surface radiale externe 32.

La figure 1bis illustre, de manière schématique et non limitative, une machine électrique selon un mode de réalisation de l'invention.

Sur cette figure, les références identiques à celle de la figure 1 correspondent aux mêmes éléments et ne seront pas redétaillés.

La figure 1bis diffère de la figure 1 par le fait que la plaque 21 comprend une extrémité interne arrondie 50 au niveau de l'extrémité la plus proche de l'axe longitudinal, de manière à limiter le risque d'endommagement des fils d'éléments conducteurs avec l'extrémité interne, notamment au moment du bobinage, ce qui pourrait arriver avec une extrémité interne pointue.

La figure 2 illustre, de manière schématique et non limitative, une vue partielle selon un plan longitudinal passant par une encoche (passage radial) du stator de la machine électrique selon un mode de réalisation.

Le trait mixte horizontal représente l'axe longitudinal de la machine électrique du plan longitudinal.

La machine électrique comporte un stator avec un corps de stator 8 s'étendant le long de l'axe longitudinal. Le corps de stator 8 comprend des passages radiaux, qui sont des ouvertures dans le corps de stator 8 afin de permettre le passage des bobines du stator. Les bobines ont des têtes de bobines 7 qui dépassent à chaque extrémité longitudinale 9a et 9b du corps de stator 8.

Le stator est mis en place dans une enveloppe extérieure qui comprend un carter 4, de préférence cylindrique et deux flasques 5 situés chacun à une extrémité longitudinale du carter 4. L'enveloppe extérieure permet, entre autres, de protéger les pièces internes de la machine électrique.

La machine comprend un guide thermique dans au moins un passage radial du corps de stator 8 (de préférence dans chaque passage radial du corps de stator 8).

Le guide thermique comprend une plaque 21, s'étendant radialement et s'étendant sur toute la longueur longitudinale L du corps de stator 8.

A l'extrémité radiale externe 23 (extrémité la plus éloignée de l'axe longitudinal) de la plaque 21, le guide thermique comprend une pièce massive 27, qui peut être un fil ou un tube par exemple, fixé à la plaque 21.

Le guide thermique comprend également des extensions 22 à chaque extrémité longitudinale 9a et 9b du corps de stator 8 (et donc de la plaque 21). Ces extensions 22 peuvent être un prolongement de la partie massive 27, voire de la plaque 21, ou être des pièces rapportées.

Telles que représentées, les extensions 22 forment chacune un S : en partant de la plaque 21, elles s'étendent d'abord sur une première partie 24 longitudinalement en direction du flasque 5 le plus proche, puis elles s'étendent sur une deuxième partie 25 radialement en direction du carter 4 puis sur une troisième partie 26 longitudinalement en direction du flasque 5 en partant de la liaison avec la deuxième partie (mais pour cette troisième partie, elles pourraient être en direction du corps de stator et ainsi former un « C » au lieu d'un « S »).

La troisième partie 26 des extensions est en contact avec la surface interne du carter. Un anneau fretté 31 est positionné sur chacune de ces troisièmes parties 26 pour assurer le contact entre l'extension 22 constituée des parties 24/25/26 et le carter 11 et son maintien dans le temps.

Pour ce faire, l'anneau fretté 31 peut avoir une partie conique pour faciliter la mise en place et le contact avec l'extension 22 et une partie cylindrique.

L'anneau fretté 31 pourrait bien entendu être remplacé par une soudure entre la troisième partie 26 de l'extension et le carter 4 ou par un anneau vissé avec un filetage sur son diamètre externe adapté à un taraudage sur le diamètre interne du carter, ou une vis de bridage de chaque extension 26 dans le carter 4.

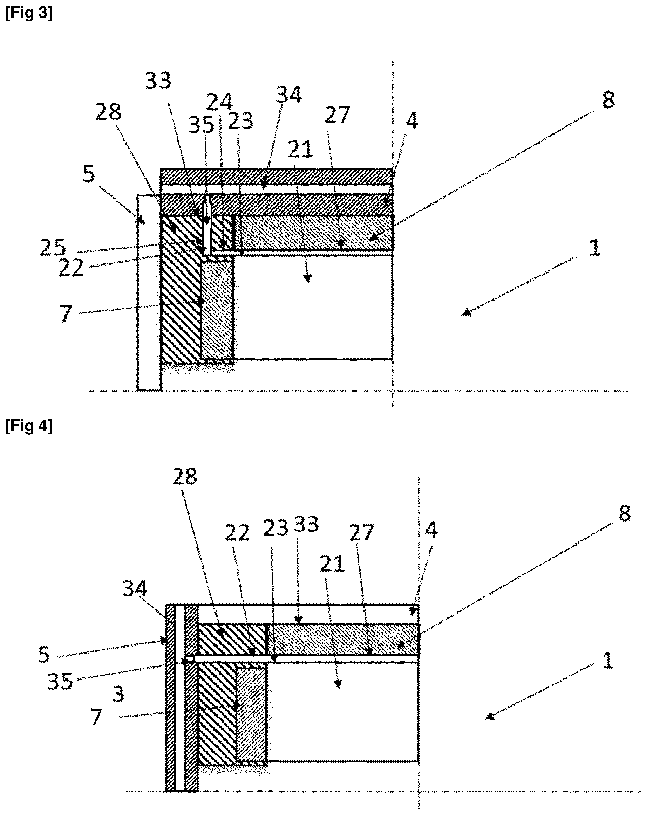

La figure 3 illustre, de manière schématique et non limitative, une vue partielle dans un plan longitudinal passant par une encoche (passage radial) du stator d'une deuxième variante de machine électrique selon l'invention.

Dans cette illustration, un seul côté longitudinal est représenté. Il est bien entendu que l'autre extrémité de la machine (flasque, extension du guide thermique notamment) est similaire et symétrique par rapport à un plan orthogonal à l'axe longitudinal.

Le trait mixte horizontal représente l'axe longitudinal de la machine électrique 1.

La machine électrique 1 comprend un stator avec un corps de stator 8 qui comporte des passages radiaux. Au moins un guide thermique est positionné dans ces passages radiaux (de préférence au moins un guide thermique dans chaque passage radial).

Le guide thermique comprend une plaque 21 qui s'étend radialement sur toute la longueur du corps de stator 8.

A l'extrémité radiale externe 23 de la plaque 21, est fixée sur la plaque 21 une partie massive 27. Puis à chaque extrémité longitudinale de la plaque 21, se trouve des extensions 22 qui dépassent de chaque côté de la plaque. Ces extensions 22 s'étendent d'abord longitudinalement sur une première partie 24 puis radialement sur une deuxième partie 25.

Ici, la partie massive 27 et les extensions 22 sont formées par un tube creux, apte à laisser circuler un fluide caloporteur permettant un refroidissement amélioré des passages radiaux et donc des bobines.

La deuxième partie 25 s'étend radialement jusqu'à pouvoir s'insérer dans un alésage 35 radial du carter 4. Elle peut être soudée au carter 4 dans cette position ou bien l'étanchéité peut être assurée par des moyens d'étanchéité, tels que des joints toriques, mis en place entre le tube et l'alésage 35.

L'alésage 35 débouche dans un canal de refroidissement 34 dans le carter. Tel que représenté, le canal de refroidissement 34 est longitudinal. Ainsi, un fluide caloporteur peut circuler dans le canal de refroidissement 34 du carter puis dans le guide thermique.

Un matériau d'enrobage 28, tel qu'une résine, peut optionnellement être mis en place, de chaque côté du corps de stator, une fois la machine assemblée pour combler l'espace situé entre la surface interne 33 du carter 4, le flasque 5, le corps de stator 8 et l'extension 22. Le matériau d'enrobage 28 enrobe également les têtes de bobines 7 situées dans cet espace.

Tel que représenté, le matériau d'enrobage 28 est en contact avec le flasque 5 mais il pourrait ne pas être en contact avec le flasque 5.

La figure 4 illustre, de manière schématique et non limitative, une vue partielle dans un plan longitudinal passant par une encoche (passage radial) du stator d'une troisième variante de machine électrique selon l'invention.

Dans cette illustration, un seul côté longitudinal est représenté. Il est bien entendu que l'autre extrémité de la machine (flasque, extension du guide thermique notamment) est similaire et symétrique par rapport à un plan orthogonal à l'axe longitudinal.

Le trait mixte horizontal représente l'axe longitudinal de la machine électrique 1.

La machine électrique 1 comprend un stator avec un corps de stator 8 qui comporte des passages radiaux. Au moins un guide thermique est positionné dans ces passages radiaux (de préférence au moins un guide thermique dans chaque passage radial).

Le guide thermique comprend une plaque 21 qui s'étend radialement sur toute la longueur du corps de stator 8.

A l'extrémité radiale externe 23 de la plaque 21, est fixée sur la plaque 21 une partie massive 27. Puis, à chaque extrémité longitudinale de la plaque 21 sur la périphérie radiale de la plaque 21, se trouve des extensions 22 qui dépassent de chaque côté de la plaque. Ces extensions 22 s'étendent longitudinalement jusqu'au flasque.

Ici, la partie massive 27 et les extensions 22 sont formées par un tube creux droit, apte à laisser circuler un fluide caloporteur permettant un refroidissement amélioré des passages radiaux et donc des conducteurs dans l'encoche.

Chaque extension 22 s'étend jusqu'au flasque 5 de manière à pouvoir s'insérer dans un alésage 35 longitudinal du flasque 5. Elle peut être fixée au flasque 5 (par vissage, rivetage, frettage ou soudage par exemple) dans cette position ou bien l'étanchéité peut être assurée par des moyens d'étanchéité, tels que des joints toriques, mis en place entre le tube et l'alésage 35.

L'alésage 35 débouche dans un canal de refroidissement 34 du flasque. Tel que représenté, le canal de refroidissement 34 est radial. Ainsi, un fluide caloporteur peut circuler dans le canal de refroidissement 34 du flasque 5 puis dans le guide thermique.

Un matériau d'enrobage 28, tel qu'une résine, peut optionnellement être mis en place, de chaque côté du corps de stator 8, une fois la machine assemblée pour combler l'espace situé entre la surface interne 33 du carter 4, le flasque 5, le corps de stator 8 et l'extension 22. Le matériau d'enrobage 28 enrobe également les têtes de bobines 7 situées dans cet espace.

Tel que représenté, le matériau d'enrobage 28 est en contact avec le flasque 5 mais il pourrait ne pas être en contact avec le flasque 5.

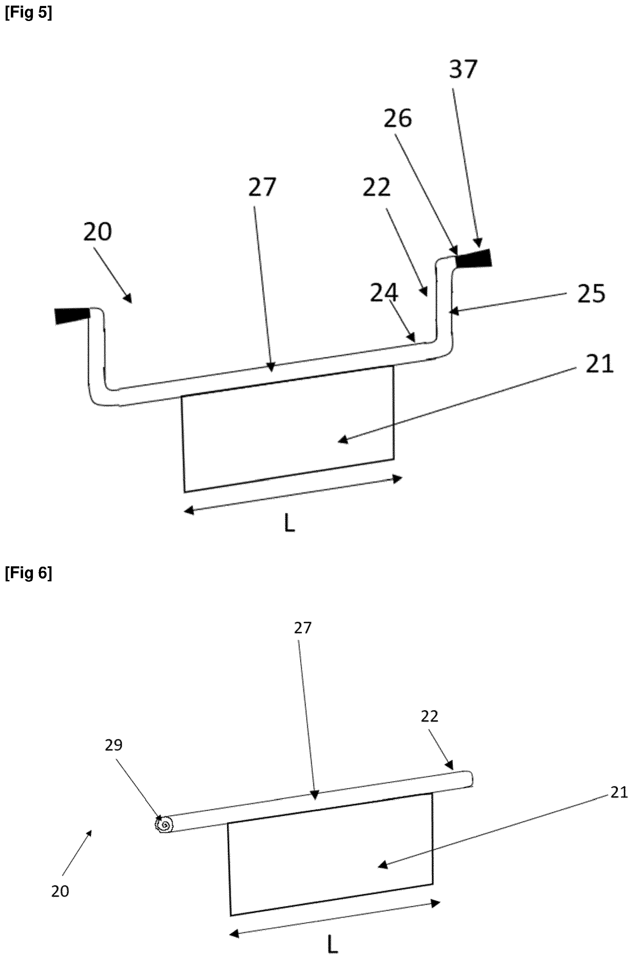

La figure 5 illustre, de manière schématique et non limitative, un premier mode de réalisation d'un guide thermique selon l'invention.

Le guide thermique 20 comprend une plaque 21, avantageusement plane pour être mise en place radialement dans le passage radial du corps de stator de la machine électrique.

La longueur L de la plaque 21 correspond sensiblement à la longueur longitudinale du corps de stator 8 (et donc à celle du passage radial).

A une extrémité radiale (externe) de la plaque 21, se trouve une partie massive 27 dont la longueur est égale à la longueur L de la plaque 21.

Le guide thermique 20 comprend également des extensions 22, à chaque extrémité longitudinale (selon la longueur L) de la pièce massive et de la plaque 21.

Ces extensions 22 s'étendent d'abord longitudinalement sur une première partie 24, puis radialement en direction du carter (non visible sur la figure) sur une deuxième partie 25 puis longitudinalement en direction du flasque le plus proche (non représenté sur la figure) sur une troisième partie 26. Ainsi, ces extensions 22 forment un « S ».

La troisième partie 26 peut comprendre une portion aplatie 37 de manière à faciliter le contact avec le carter, notamment si un anneau fretté ou vissé est utilisé pour maintenir le contact entre le carter et l'extension 22. Cette portion aplatie 37 peut également faciliter le soudage de la troisième partie 26 au carter 4.

Les extensions 22 et/ou la partie massive 27 peuvent comprendre un fil, un câble, un tube ou une plaque enroulée sur elle-même puis découpée.

La figure 6 illustre, de manière schématique et non limitative, un deuxième mode de réalisation d'un guide thermique selon l'invention.

Le guide thermique 20 comprend une plaque 21, avantageusement plane pour être mise en place radialement dans le passage radial.

La longueur L de la plaque 21 correspond sensiblement à la longueur longitudinale du corps de stator 8 (et donc à celle du passage radial).

A une extrémité radiale (externe) de la plaque 21, se trouve une partie massive 27 dont la longueur est égale à la longueur L de la plaque 21.

Le guide thermique 20 comprend également des extensions 22, à chaque extrémité longitudinale (selon la longueur L) de la pièce massive 27 et de la plaque 21.

Les extensions 22 et la partie massive 27 sont réalisées par une plaque enroulée sur elle-même puis découpée 29. Ainsi, le guide thermique peut être réalisé en une seule pièce, à savoir une plaque, qui est enroulée sur elle-même à une extrémité pour former la partie massive 27 et les extensions 22 puis on élimine par usinage ou découpage, une partie de la plaque plane à chaque extrémité, de manière à ne laisser que les extensions 22.

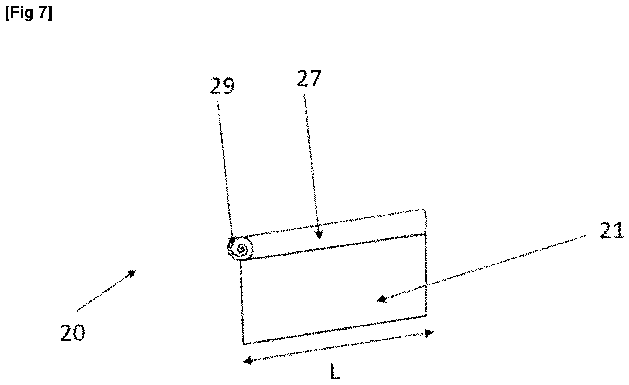

La figure 7 illustre, de manière schématique et non limitative, un troisième mode de réalisation d'un guide thermique selon l'invention.

Le guide thermique 20 comprend une plaque 21, avantageusement plane pour être mise en place radialement dans le passage radial.

La longueur L de la plaque 21 correspond sensiblement à la longueur longitudinale du corps de stator 8 (et donc à celle du passage radial).

A une extrémité radiale (externe) de la plaque 21, se trouve une partie massive 27 dont la longueur est égale à la longueur L de la plaque 21.

Le guide thermique 20 comprend également des extensions (non visibles), à chaque extrémité longitudinale (selon la longueur L) de la pièce massive 27 et de la plaque 21.

La partie massive 27 est réalisée par une plaque enroulée sur elle-même 29. Ainsi, la plaque 21, qui est enroulée sur elle-même à une extrémité peut former la partie massive 27. On peut également réaliser les extensions par une plaque enroulée (la même de préférence) ou on peut rapporter les extensions, qui peuvent prendre la forme d'un fil ou d'un morceau de plaque, par exemple par soudage.

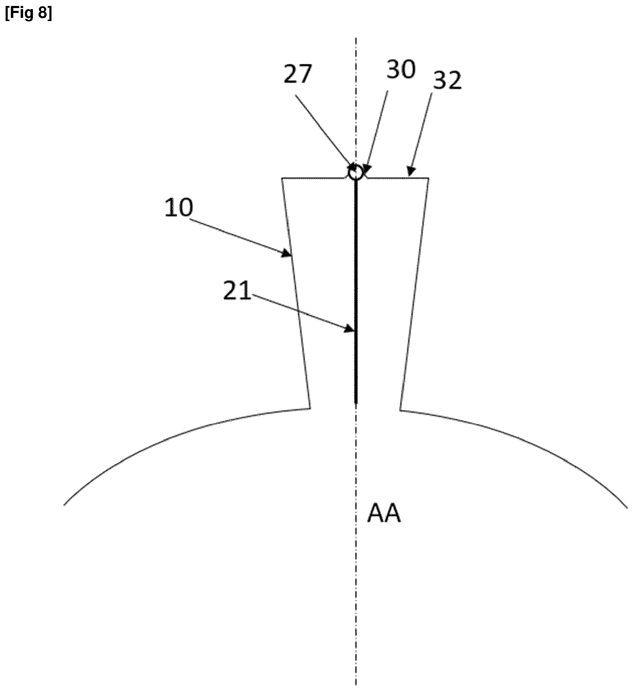

La figure 8 illustre, de manière schématique et non limitative, le guide thermique logé dans le passage radial avec une entaille selon l'invention.

Sur cette figure, le passage radial 10 est représenté avec un axe de symétrie AA. Le guide thermique comprend une plaque 21 plane s'étendant radialement sur toute la longueur du corps de stator et une partie massive 27 fixée à l'extrémité radiale externe de la plaque 21.

Le passage radial 10 comprend une entaille (rainure ou gorge par exemple) 30 sur sa surface radiale externe 32 de manière à recevoir la partie massive 27 du guide thermique et ainsi à le maintenir en position plus facilement, par exemple pendant l'opération de bobinages des bobines, autour du guide thermique dans les passages radiaux 10.

Pour cela, l'entaille 30 a une forme sensiblement identique à la forme de la partie massive 27.

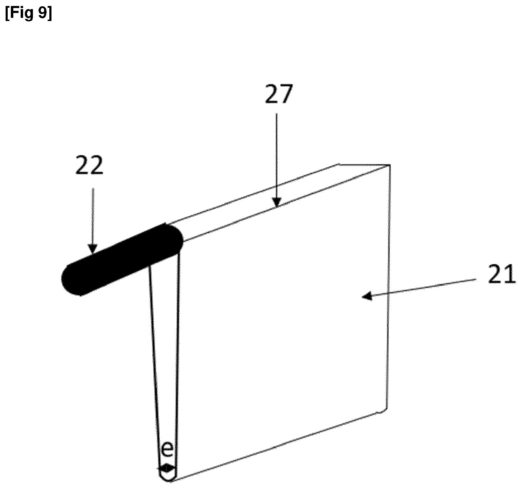

La figure 9 représente un quatrième mode de réalisation d'un guide thermique d'une machine électrique selon l'invention.

Dans cette variante, le guide thermique comprend une plaque 21 dont l'épaisseur e est variable le long de la direction radiale.

L'épaisseur e de la plaque 21 peut être la plus faible au niveau de l'extrémité radiale interne (la plus proche de l'axe longitudinal) de la plaque 21 et augmenter, de préférence linéairement jusqu'à l'extrémité radiale externe (la plus éloignée de l'axe longitudinal) de plaque 21. Ainsi, la plaque est plus épaisse au niveau de l'extrémité radiale externe qui forme ainsi une partie massive 27.

De préférence, comme représenté, l'extrémité de la plaque la plus proche de l'axe longitudinal est arrondie de manière à ne pas endommager les éléments conducteurs des bobines lors de leurs mises en place.

Des extensions 22 (une seule est représentée mais il est bien entendu qu'une deuxième extension similaire et de préférence symétrique selon un plan orthogonal à l'axe longitudinal de la machine peut être positionnée à l'autre extrémité longitudinal de la plaque 21) sont alors fixées à chaque extrémité longitudinale de la plaque 22, en prolongement de la partie massive 27 pour assurer un contact par conduction thermique de la partie massive 27 au carter ou au flasque (non représentés).

Bien entendu, l'invention n'est pas limitée aux modes de réalisation illustrés mais embrasse au contraire toutes les variantes sans sortir du cadre de l'invention.

## Revendications

1. Machine électrique (1) comprenant un stator s'étendant selon un axe longitudinal, un carter (4) et deux flasques (5) en matériau métallique, lesdits deux flasques (5) étant agencés respectivement aux extrémités longitudinales dudit carter (4) et formant avec ledit carter (4) une enveloppe extérieure de ladite machine électrique (1), ledit stator (3) comprenant un corps de stator (8) et des bobines (6), le corps de stator (8) comprenant une multiplicité de passages radiaux (10) disposés circonférentiellement et s'étendant sur toute la longueur longitudinale (L) du corps de stator (8) pour le passage des bobines (6) dans les passages radiaux (10), **caractérisée en ce que** la machine électrique (1) comprend au moins un guide thermique (20) dans au moins un passage radial (10), le guide thermique (20) comprenant une plaque (21) s'étendant sur toute la longueur longitudinale (L) du corps de stator (8) et orientée sensiblement radialement, la plaque étant en contact des bobines, et deux extensions (22) fixées longitudinalement de part et d'autre de la plaque (21) , au niveau de la périphérie radiale externe (23) de la plaque (21), la machine électrique comprenant un moyen de mise en contact pour mettre les extensions (22) en contact du carter (4) et/ou des flasques (5).

2. Machine électrique (1) selon la revendication 1, dans laquelle chaque passage radial (10) a un axe de symétrie radial (AA), et pour laquelle la plaque (21) est positionnée sur l'axe de symétrie (AA) du passage radial (10) dans lequel le guide thermique (20) est positionné.

3. Machine électrique (1) selon l'une des revendications précédentes, dans laquelle les extensions (22) s'étendent d'abord longitudinalement en partant de la plaque (21), puis radialement en direction du carter (4) puis longitudinalement, pour venir en contact longitudinal avec le carter (4), de manière à former un « S » ou un « C ».

4. Machine électrique (1) selon l'une des revendications précédentes, dans laquelle le guide thermique (20) comprend une partie massive (27) fixée à l'extrémité radiale externe (23) de la plaque (21) et aux extensions (22).

5. Machine électrique (1) selon la revendication 4, dans laquelle la partie massive (27) et les extensions (22) forment une pièce unique.

6. Machine électrique (1) selon la revendication 5, dans laquelle ladite pièce unique est un tube apte à la circulation d'un fluide caloporteur, le tube étant relié au carter (4) et/ou aux flasques (5) par des moyens d'étanchéité et/ou en étant noyé dans un matériau d'enrobage (28), tel qu'une résine.

7. Machine électrique (1) selon l'une des revendications 4 ou 5, dans laquelle la plaque (21) comprend une partie enroulée sur elle-même (29) au niveau de l'extrémité radiale externe (23), la partie enroulée sur elle-même (29) puis découpée formant la partie massive (27).

8. Machine électrique (1) selon la revendication 7, dans laquelle les extensions (22) sont constituées chacune d'un prolongement longitudinal de la partie enroulée sur elle-même (29), chaque prolongement étant de préférence aplati (37) au niveau du contact avec le carter (4) ou le flasque (5).

9. Machine électrique (1) selon l'une des revendications 4 à 8, dans laquelle le corps de stator (8) comprend une entaille (30) au niveau de la surface radiale externe (32) du passage radial (10), ladite entaille (30) étant configurée pour recevoir ladite partie massive (27).

10. Machine électrique (1) selon l'une des revendications précédentes, dans laquelle la plaque (21) est d'épaisseur constante ou d'épaisseur croissante depuis l'extrémité radiale interne jusqu'à l'extrémité radiale externe (23).

11. Machine électrique (1) selon l'une des revendications précédentes, dans laquelle le guide thermique (20) comprend un matériau de conductivité thermique supérieure au matériau du corps de stator (8), de préférence comprenant de l'aluminium ou du cuivre.

12. Machine électrique (1) selon l'une des revendications précédentes, dans laquelle les extensions (22) sont fixées par soudage, par vis et/ou par rivets au carter (4) ou au flasque (5).

13. Machine électrique (1) selon l'une des revendications précédentes, dans laquelle la machine électrique (1) comprend un anneau fretté (31) ou vissé à chaque extrémité longitudinale du corps de stator (8), chaque extension (22) étant positionnée entre l'anneau fretté (31) ou vissé et le carter (4).

14. Machine électrique (1) selon l'une des revendications précédentes, dans laquelle la machine électrique (1) comprend au moins un guide thermique (20) dans chaque passage radial (10), de préférence la machine électrique (1) comprend plusieurs guides thermiques (20) dans chaque passage radial (10).
